# FASCICULE DE BREVET EUROPEEN

(11) **EP 2 082 948 B1**
(45) Date de publication et mention de la délivrance du brevet: **07.07.2010**
(21) Numéro de dépôt: 09150021.5
(22) Date de dépôt: 05.01.2009
(51) Int. Cl.: B62D 25/10, B62D 25/12, B60R 21/34

(54) **Capot pour véhicule incorporant une doublure de capot**
Kraftfahrzeug-Motorhaube mit Haubenauskleidung
Hood for a vehicle comprising a lining thereof

(30) Priorité: 28.01.2008 FR 0850513
(43) Date de publication de la demande: 29.07.2009
(73) Titulaire: Peugeot Citroën Automobiles SA, 78140 Vélizy Villacoublay (FR)
(72) Inventeur: Gourvennec, Thibault, 91170 Viry Chatillon (FR); Jeanneau, Clément, 92100 Boulogne Billancourt (FR)
(74) Mandataire: Fernandez, Francis Lionel

(56) Documents cités:
- EP-A- 1 504 985
- WO-A-2005/058656
- US-A- 5 706 908
- US-A1- 2006 006 698

## Description

La présente invention concerne un capot incorporant une doublure de capot et qui est destiné à être monté sur un véhicule, tel qu'un véhicule automobile.

Une telle doublure de capot est destinée à être solidarisée avec une peau de capot, c'est-à-dire la paroi du capot, visible de l'extérieur, lorsque le capot est monté sur le véhicule. La doublure de capot doit, en particulier, pouvoir se déformer sous l'effet d'un choc appliqué sur la peau du capot, par exemple celui d'un impact avec un piéton, un cycliste, pour limiter au maximum le traumatisme subi par cette personne.

Le document WO-A-2005/058656 divulgue un capot pour véhicule. Ce capot est constitué d'une paroi de peau fabriquée dans un premier matériau et d'une doublure supportant la peau et qui est fabriquée dans un deuxième matériau plus fragile que le premier. Des nervures, des pontets sont réalisés dans la doublure autour d'une ouverture centrale prévue au travers d'une paroi en déport dans ladite doublure. En fonction de la nature des couples de matériaux choisis, des dispositions des nervures et des pontets, on obtient, lors d'un test d'impact mettant en oeuvre un impacteur type, des décélérations plus faibles que celles mesurées dans un capot dont la peau et la doublure sont fabriquées dans un même matériau.

Le document US-A-2006/006698 divulgue un capot pour un véhicule, comprenant une doublure de capot sur laquelle est solidarisée une peau de capot, la doublure de capot étant conformée de manière à présenter une première paroi dont la géométrie lui permet d'épouser localement la peau de capot, une seconde paroi placée en déport de la première en étant reliée à celle-ci par une paroi intermédiaire et au moins un évidement étant réalisé au travers de la paroi intermédiaire.
Le document US a été pris à base du préambule de le revendication 1.

La présente invention vise à proposer une solution alternative prenant la forme d'un capot incorporant une doublure de capot qui présente de bonnes caractéristiques d'absorption des chocs.

A cet effet, est proposé un capot pour un véhicule, comprenant une doublure de capot sur laquelle est solidarisée une peau de capot, la doublure de capot étant conformée de manière à présenter une première paroi dont la géométrie lui permet d'épouser localement la peau de capot, une seconde paroi placée en déport de la première en étant reliée à celle-ci par une paroi intermédiaire, une ouverture traversant la seconde paroi, une ouverture traversant la première paroi et ladite paroi intermédiaire s'étendant à l'extérieur de ladite ouverture, le capot étant remarquable en ce qu'au moins un évidement est réalisé au travers de la paroi intermédiaire et en ce que, ledit ou chaque évidement est prolongé de manière à atteindre la première paroi et la seconde paroi.

La présence de ce ou de ces évidements permet de contrôler finement la déformation de la doublure de capot et par conséquent, la déformation du capot sous l'effet d'un choc.

La paroi intermédiaire est préférentiellement déformée pendant le choc.

Avantageusement, ledit ou chaque évidement est placé sur une portion arrondie de la paroi intermédiaire.

Cette portion arrondie, qui est structurellement plus résistante qu'une portion droite, voit ainsi sa rigidité altérée par la présence de ce ou de ces évidements.

Avantageusement, ledit ou chaque évidement présente une section rectangulaire.

Avantageusement, ledit ou chaque évidement présente une section trapézoïdale.

Selon un mode de réalisation particulier, la doublure de capot incorpore une barrette réunissant deux bords de l'ouverture pour limiter localement la déformation de la peau de capot lorsque l'on appuie sur elle.

Avantageusement, un évidement est réalisé dans la paroi intermédiaire dans le prolongement de la barrette.

La jonction de la barrette avec la première paroi n'accroît pas, à cet endroit, la rigidité de la doublure de capot.

La présente invention couvre également un véhicule incorporant un tel capot.

L'invention sera mieux comprise, et d'autres buts, caractéristiques, détails et avantages de celle-ci apparaîtront plus clairement au cours de la description explicative qui va suivre, faite en référence aux dessins schématiques annexés, donnés uniquement à titre d'exemple illustrant un mode de réalisation de l'invention et dans lesquels :
- la figure 1 représente une vue de dessus d'une doublure de capot selon l'invention,
- la figure 2 représente une vue en coupe d'un capot selon l'invention,
- la figure 3 représente une vue de dessus d'une variante de réalisation d'une doublure de capot selon l'invention et,

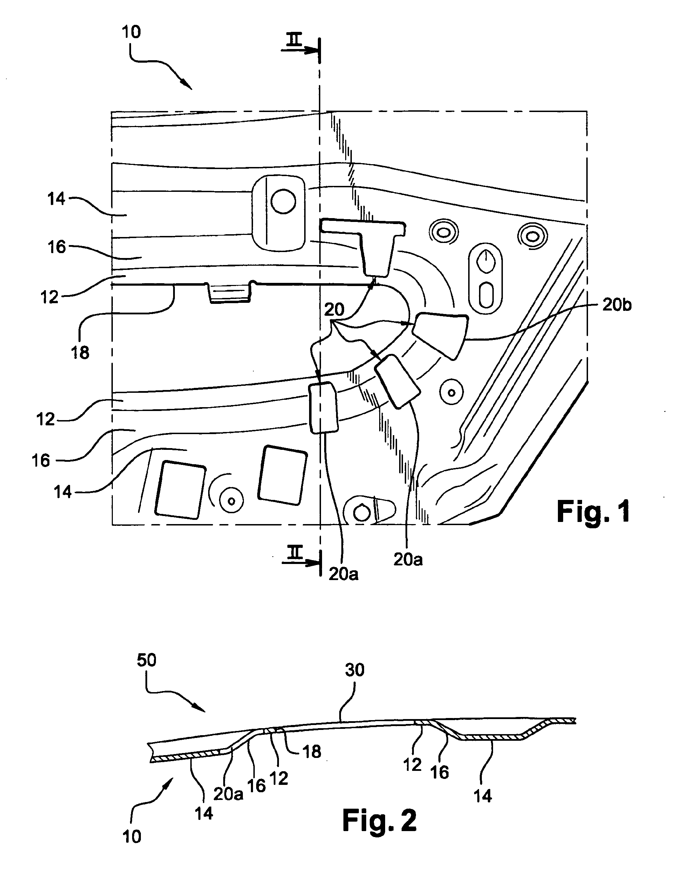

- la figure 2 représente une vue en coupe d'une variante de réalisation d'un capot selon l'invention.

La doublure 10 de capot, présentée sur les figures 1 et 2, est constituée d'une pièce fabriquée par emboutissage. Elle est destinée à être solidarisée avec une paroi dite peau 30 de capot pour constituer un capot 50 pour un véhicule, par exemple un véhicule automobile. La peau de capot, ainsi que le capot, sont montrés uniquement sur la figure 2. A l'issue du montage du capot sur le véhicule, seule la peau de capot est apparente.

Cette doublure 10 apporte une rigidité suffisante et nécessaire au capot. Elle est conformée de manière à présenter une première paroi 12 dont la géométrie lui permet d'épouser localement la peau de capot pour y être solidarisée, une seconde paroi 14 placée en déport de la première en étant reliée à celle-ci par une paroi intermédiaire 16 qui est inclinée par rapport aux deux autres. Les deux parois 12 et 14 distantes et réunies par la paroi intermédiaire 16 procurent ainsi un niveau de rigidité particulier en torsion et en flexion au capot.

Une ouverture 18 traverse la première paroi 12 pour alléger la doublure 10 de capot et aussi pour faciliter sa déformation.

Pour contrôler la déformation du capot dans le cas d'un choc avec un piéton, un cycliste, c'est-à-dire pour limiter la décélération subie et ou allonger sa durée, la solution adoptée dans l'invention a consisté à prévoir au moins un évidement 20 réalisé au travers de la paroi intermédiaire 16. Quatre évidements sont montrés sur cette figure. 1. Ces évidements 20 sont prolongés de part et d'autre de manière à atteindre la première paroi 12 et la seconde paroi 14 pour que, de préférence, seule la paroi intermédiaire 16 de la doublure soit déformée pendant le choc. Les évidements 20 sont placés, de préférence, sur les portions arrondies de la paroi intermédiaire 16, structurellement plus raide qu'une portion droite, afin de faciliter la déformation de celle-ci lors d'un choc sur la peau 30 de capot. Les évidements présentent avantageusement une section rectangulaire comme ceux portant la référence 20a et qui sont placés dans la zone la moins courbée d'une portion arrondie de la paroi intermédiaire 16 ou une section trapézoïdale comme celui qui porte la référence 20b et qui est placé dans la zone la plus courbée d'une portion arrondie de la paroi intermédiaire 16.

On peut de la sorte contrôler assez finement la déformation de la paroi intermédiaire afin d'obtenir un capot souple permettant une bonne absorption des chocs.

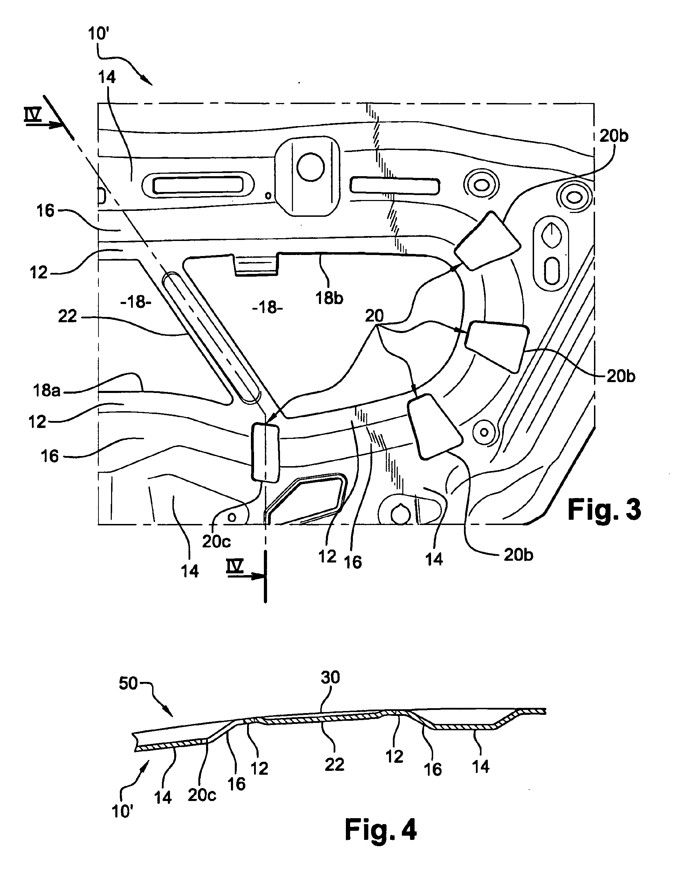

Dans la variante de réalisation de la doublure 10' de capot présentée à la figure 3, une barrette 22 sépare l'ouverture 18 en deux plus petites ouvertures 18a et 18b.

A la Fig. 4, la barrette 22 réunit ainsi deux bords de l'ouverture 18 pour limiter localement la déformation de la peau de capot lorsque l'on appuie sur elle.

Sur les figures 3 et 4, on remarquera qu'un évidement 20c est réalisé dans la paroi intermédiaire 16 dans le prolongement de la barrette 22 pour que la jonction de la barrette 22 avec la première paroi n'accroisse pas la rigidité de la doublure de capot à cet endroit.

On notera que dans une variante de réalisation, non représentée, plusieurs barrettes réunissent les bords de l'ouverture lorsque celle-ci présente une relativement grande longueur.

Cette construction apporte ainsi une solution à deux problèmes antinomiques : meilleure absorption de chocs par le capot et déformation réduite de la peau du capot lorsque l'on appuie sur elle.

## Revendications

1. Capot (50) pour un véhicule, comprenant une doublure (10, 10') de capot sur laquelle est solidarisée une peau (30) de capot, la doublure (10, 10') de capot étant conformée de manière à présenter une première paroi (12) dont la géométrie lui permet d'épouser localement la peau (30) de capot, une seconde paroi (14) placée en déport de la première en étant reliée à celle-ci par une paroi intermédiaire (16), une ouverture (18) traversant la première paroi (12) et ladite paroi intermédiaire (16) s'étendant à l'extérieur de ladite ouverture (18), **caractérisée en ce qu'**au moins un évidement (20) est réalisé au travers de la paroi intermédiaire (16), ledit ou chaque évidement (20) étant prolongé de manière à atteindre la première paroi (12) et la seconde paroi (14) .

2. Capot (50) selon la revendication 1, **caractérisé en ce que** ledit ou chaque évidement (20) est placé sur une portion arrondie de la paroi intermédiaire (16).

3. Capot (50) selon la revendication 1 ou 2, **caractérisé en ce que** ledit ou chaque évidement (20a) présente une section rectangulaire.

4. Capot (50) selon la revendication 1 ou 2, **caractérisé en ce que** ledit ou chaque évidement (20b) présente une section trapézoïdale.

5. Capot (50) selon l'une quelconque des revendications précédentes, **caractérisé en ce que** la doublure (10') de capot incorpore une barrette (22) réunissant deux bords de l'ouverture (18) pour limiter localement la déformation de la peau (30) de capot lorsque l'on appuie sur elle.

6. Capot (50) selon la revendication 5, **caractérisé en ce qu'**un évidement (20c) est réalisé dans la paroi intermédiaire (16) dans le prolongement de la barrette (22).

7. Véhicule, **caractérisé en ce qu'**il incorpore un capot (50) selon l'une quelconque des revendications 1 à 6.

## Claims

1. Hood or bonnet (50) for a vehicle, comprising a hood lining (10, 10') to which a hood panel (30) is secured, the hood lining (10, 10') being shaped in such a way as to have a first wall (12) the geometry of which allows it locally to hug the hood panel (30), a second wall (14) offset from the first and connected thereto by an intermediate wall (16), an opening (18) passing through the first wall (12) and the said intermediate wall (16) extending on the outside of the said opening (18), **characterized in that** at least one cavity (20) is made through the intermediate wall (16), the said of each cavity (20) being extended in such a way as to reach the first wall (12) and the second wall (14).

2. Hood (50) according to Claim 1, **characterized in that** the said or each cavity (20) is positioned on a rounded portion of the intermediate wall (16).

3. Hood (50) according to Claim 1 or 2, **characterized in that** the said or each cavity (20a) is of rectangular cross section.

4. Hood (50) according to Claim 1 or 2, **characterized in that** the said or each cavity (20b) is of trapezoidal cross section.

5. Hood (50) according to any one of the preceding claims, **characterized in that** the hood lining (10') incorporates a strip (22) connecting two edges of the opening (18) in order locally to limit the deformation of the hood panel (30) when pressure is applied to the latter.

6. Hood (50) according to Claim 5, **characterized in that** a cavity (20c) is made in the intermediate wall (16) in the continuation of the strip (22).

7. Vehicle, **characterized in that** it incorporates a hood (50) according to any one of Claims 1 to 6.

## Patentansprüche

1. Fahrzeughaube (50) mit einer Haubenverkleidung (10, 10'), an der eine Haubenhaut (30) fest verbunden ist, wobei die Haubenverkleidung (10, 10') so angepasst ist, dass sie eine erste Wand (12), die sich dank ihrer Geometrie örtlich an die Haubenhaut (30) anpasst, eine zweite Wand (14), die versetzt zur ersten platziert ist, indem sie über eine Zwischenwand (16) mit dieser verbunden ist, und eine durch die erste Wand (12) hindurchgehende Öffnung (18) aufweist, wobei sich die Zwischenwand (16) außerhalb der Öffnung (18) erstreckt, **dadurch gekennzeichnet, dass** durch die Zwischenwand (16) hindurch mindestens eine Aussparung (20) ausgeführt ist, wobei die oder jede Aussparung (20) so verlängert ist, dass sie bis zur ersten Wand (12) und zur zweiten Wand (14) reicht.

2. Haube (50) nach Anspruch 1, **dadurch gekennzeichnet, dass** die oder jede Aussparung (20) an einem abgerundete Abschnitt der Zwischenwand (16) platziert ist.

3. Haube (50) nach Anspruch 1 oder 2, **dadurch gekennzeichnet, dass** die oder jede Aussparung (20a) einen rechteckigen Querschnitt hat.

4. Haube (50) nach Anspruch 1 oder 2, **dadurch gekennzeichnet, dass** die oder jede Aussparung (20b) einen trapezförmigen Querschnitt hat.

5. Haube (50) nach einem der vorhergehenden Ansprüche, **dadurch gekennzeichnet, dass** die Haubenverkleidung (10') einen Steg (22) enthält, der zwei Ränder der Öffnung (18) miteinander verbindet, um örtlich die Deformierung der Haubenhaut (30) zu begrenzen, wenn man sich auf sie lehnt.

6. Haube (50) nach Anspruch 5, **dadurch gekennzeichnet, dass** in der Zwischenwand (16) in der Verlängerung des Stegs (22) eine Aussparung (20c) ausgeführt ist.

7. Fahrzeug, **dadurch gekennzeichnet, dass** es eine Haube (50) nach einem der Ansprüche 1 bis 6 enthält.
